# FASCICULE DE BREVET EUROPEEN

(11) **EP 0 573 948 B1**
(45) Date de publication et mention de la délivrance du brevet: **18.03.1998**
(21) Numéro de dépôt: 93109156.5
(22) Date de dépôt: 08.06.1993
(51) Int. Cl.: G02C 7/16, G02C 7/10

(54) **Monture de lunettes pour verres filtrants**
Brillengestell für Filtergläser
Spectacle frame for filter glasses

(30) Priorité: 12.06.1992 FR 9207314
(43) Date de publication de la demande: 15.12.1993
(73) Titulaire: Buffet, Alain, F-54110 Varangeville (FR)
(72) Inventeur: Buffet, Alain, F-54110 Varangeville (FR)
(74) Mandataire: Savoye, Jean-Paul

(56) Documents cités:
- FR-A- 738 533
- FR-A- 2 079 635
- FR-A- 2 341 147
- FR-A- 2 469 734
- GB-A- 373 855
- US-A- 4 511 226

## Description

La présente invention se rapporte à une monture de lunettes pour verres filtrants dont les propriétés filtrantes sont réparties de façon asymétrique sur leur surface et dont la position angulaire de chacun est réglable pour obscurcir une zone désirée du champ visuel, comprenant deux sièges de monture servant à recevoir chacun un verre filtrant, chaque siège de monture comportant deux éléments annulaires concentriques dont l'élément annulaire externe est relié au reste de la monture et dont l'élément annulaire interne est destiné à recevoir l'un des verres filtrants et est monté tournant dans l'élément annulaire externe correspondant, des moyens de manoeuvre étant associés à chaque élément annulaire interne pour permettre son entraînement en rotation afin d'orienter angulairement le verre filtrant dans le siège de monture correspondant.

On a déjà proposé un tel genre de monture de lunettes dans laquelle les verres filtrants sont orientables en fonction de la zone du champ visuel que l'on désire obscurcir. Des lunettes avec verres filtrants à propriété filtrantes réparties de façon asymétriques sur leur surface, montés de façon orientables sont notamment destinées aux conducteurs de voiture automobiles pour les protéger de l'éblouissement du soleil le jour et des projecteurs des voitures circulant en sens inverse la nuit. De telles montures sont décrites dans le FR-A-2 341 147. L'inconvénient de la solution proposée par ce document provient de la complexité du dispositif qui conduit à un article cher et peu esthétique.

Une solution, apparemment plus simple que la précédente, est proposée dans le FR-A-2469734. Selon cette solution, les verres filtrants sont enchâssés dans des montures rondes, elles-mêmes positionnée dans une partie circulaire de la monture des lunettes. Ces parties circulaires sont coupées en un endroit de leur circonférence et présentent une articulation disposée à 180° de la coupure, de manière à permettre l'insertion des montures dans lesquelles les verres sont enchâssés. A l'évidence, un tel dispositif n'offre aucune sécurité quant au maintien des montures rondes dans les parties circulaires des montures de lunettes étant donné que le segment articulé peut s'ouvrir, notamment lorsque l'on tourne les montures portant les verres filtrants.

Le but de la présente invention est de remédier, au moins en partie, aux inconvénients énumérés ci-dessus.

A cet effet, cette invention a pour objet une monture de lunette du type susmentionné, telle que définie dans la revendication 1.

Le dessin annexé illustre, schématiquement et à titre d'exemple, une forme d'exécution de la monture de lunettes objet de l'invention.

La figure 1 est une vue de face de la monture de lunettes.

La figure 2 est une vue partielle en coupe selon la ligne II-II de la figure 1.

La figure 3 est une vue en perspective de la monture de lunettes avec les verres filtrants relevés.

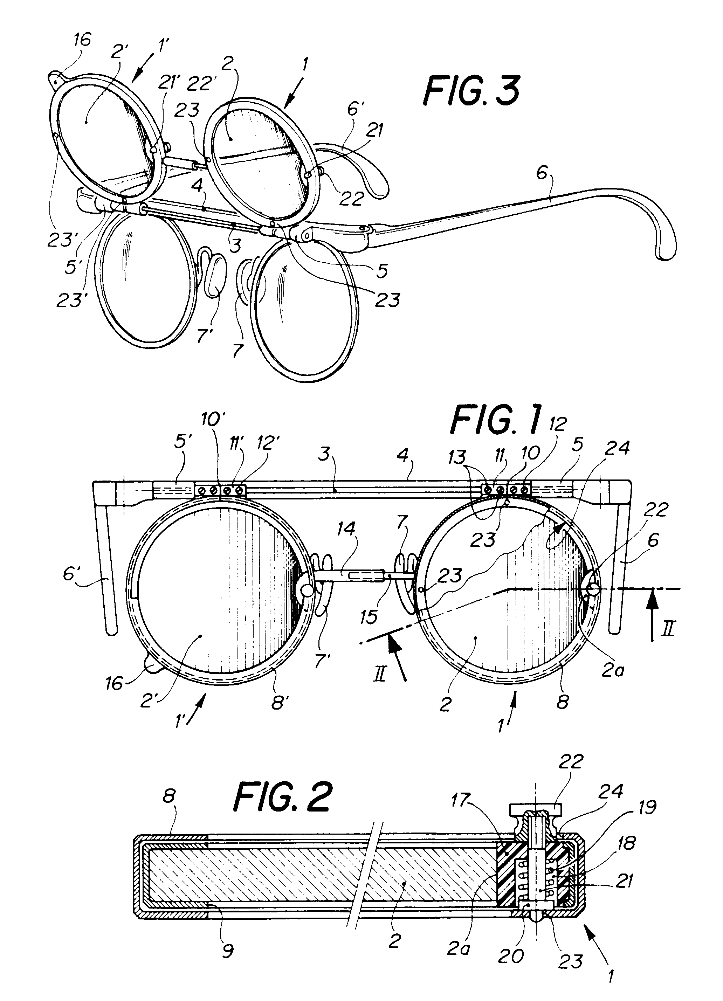

La monture de lunettes selon l'invention comporte deux sièges de monture annulaires 1,1' de deux verres filtrants 2,2' solidaires d'une tige commune 3 reliée au reste de la monture 4 par deux charnières 5,5'. Cette monture comporte encore deux branches 6,6' et deux plaquettes 7,7' pour prendre appui sur les ailes du nez. Comme illustré par la figure 1, les verres filtrants 2,2' sont complètement transparents sur une moitié de leur surface circulaire délimitée par une ligne sensiblement diamétrale, tandis que l'autre moitié présente des propriété filtrantes des rayons lumineux, de préférence ces propriétés filtrantes présentant un gradient du centre vers la périphérie où le degré de filtration est le plus accentué. Bien entendu, on peut aussi utiliser des verres teintés de sorte que la moitié transparente du verre peut être légèrement teintée, l'autre moitié présentant des propriétés filtrantes plus prononcées.

Chaque siège de monture annulaire 1,1' comporte deux anneaux gigognes 8, 9 (figure 2) constitués par des profilés en forme de U couché dont l'ouverture est dirigée vers le centre du siège annulaire, emboîtés l'un dans l'autre. L'anneau externe 8 présente une fente 10 de sorte que les deux extrémités de cette fente 10 peuvent être écartées élastiquement pour permettre d'introduire l'anneau interne 9 qui s'emboîte dans son ouverture annulaire. Chaque extrémité de l'anneau externe 8 adjacente à la fente 10 est solidaire d'un manchon 11,12. Ces deux manchons sont tangents à l'anneau externe 8 de sorte qu'ils sont coaxiaux lorsque les extrémités de la fente sont réunies, ce qui permet de les enfiler sur la tige 3 sur laquelle ils sont fixés par des vis 13.

L'anneau 8' comporte un tube 14 fixé radialement selon un axe parallèle à la tige 3 et l'anneau 8 porte un piston 15 fixé radialement coaxialement au tube 14 dans lequel il s'engage. Ainsi, les deux sièges de montures annulaires 1,1' sont rendus solidaires et susceptibles de s'articuler autour des charnières 5,5'. Une languette 16 est encore fixée à l'un des anneaux externes 8' pour permettre de faire osciller les sièges annulaires autour des charnières 5,5'.

Comme illustré par la figure 2, le verre filtrant 2 est logé dans l'ouverture annulaire de l'anneau intérieur 9. Le verre 2 comporte une découpe 2a ménagée à sa périphérie (figure 1 et 2) dans laquelle est logé un dispositif d'actionnement qui comporte un organe moulé 17 de forme complémentaire à celle de la découpe 2a. Cet organe moulé 17 est engagé dans l'ouverture annulaire de l'anneau intérieur 9. Un logement cylindrique 18 est ménagé dans une des faces planes de cet organe moulé 17 et le fond de ce logement est percé. Un ressort 19 et un piston 20 solidaire d'une tige 21 sont placés dans ce logement 18. Une extrémité de la tige 21 traverse le perçage du fond du logement 18. Cette extrémité est filetée et reçoit un organe de préhension 22 vissé, tandis que l'autre extrémité de cette tige est engagée dans un des trous de positionnement 23 ménagés à travers une des branches parallèles de l'anneau profilé externe 8. Une échancrure 24 s'étendant sur la moitié de la circonférence de l'anneau 8 est pratiquée dans l'autre des branches parallèles de l'anneau profilé externe 8, en face de la partie présentant les trous de positionnement 23. Ce dégagement 24 a pour but de permettre le déplacement angulaire de la tige 21 et de l'organe de préhension 22 lorsque l'extrémité de la tige 21 est dégagée de l'ouverture de positionnement 23 en tirant axialement cette tige à l'aide de l'organe de préhension 22, à l'encontre de la pression que le ressort 19 exerce sur le piston 20. En déplaçant angulairement l'organe de préhension 22 après avoir dégagé la tige 21 de l'ouverture de positionnement 23, on provoque le déplacement angulaire de l'anneau 9 dans l'anneau 8 et par conséquent celui du verre 2 qui, par sa découpe 2a est rendu solidaire angulairement de l'organe moulé 17 et de la tige 21. Ceci permet de déplacer la zone filtrante du verre 2. La même opération permet d'orienter angulairement la zone filtrante du verre 2' qui est muni des mêmes moyens de manoeuvre que ceux illustrés par la figure 2.

Dans l'exemple illustré on a prévu trois positions à 90° les unes des autres. Ceci permet en particulier de disposer les zones filtrantes à gauche de l'axe visuel de l'utilisateur pour éviter l'éblouissement provenant de la gauche de son champ visuel. Ceci est utile en particulier pour les automobilistes circulant dans les pays où la circulation s'effectue sur la droite de la chaussée par rapport au sens d'avance des véhicules. En déplaçant de 90° les verres 2,2' par rapport à la position précédente dans le sens contraire à celui des aiguilles de la montre en se référant à la figure 1, on amène la zone filtrante dans la partie supérieure du champ visuel de l'utilisateur ce qui permet de se protéger des rayons du soleil. Enfin, la troisième position est destinée en particulier à se protéger d'un éblouissement provenant de la droite du champ visuel et est utile en particulier pour les automobilistes circulant dans pays où les véhicules se déplacent sur la gauche de la chaussée par rapport au sens d'avance.

Les verres sont de préférence montés sur la monture 4 par un système de charnières 5,5' et sont rendus solidaires autour de l'axe de pivotement de ces charnières grâce au piston 15 engagé dans le tube 14. En saisissant la languette 16 il est donc possible de relever les sièges de monture annulaires 1,1' dans la position illustrée par la figure 1. Ceci est utile en particulier lorsque les verres filtrants 2,2' sont montés sur une paire de lunettes numie de verres de correction optique, de sorte que les verres filtrants peuvent être écartés du champ visuel lorsque l'utilisateur n'en a pas l'emploi.

Il est encore précisé que le montage des montures annulaires 1,1' sur la tige 3 par l'intermédiaire des manchons 11,12,11',12' et leur fixation par les vis 13 permet de changer à volonté l'entre-axe des verres 2,2' et par conséquent l'écart pupillaire en faisant coulisser les montures annulaires 1,1' sur la tige 3. Dans ce cas, le piston 15 de la monture 1 coulisse également dans le tube 14 de la monture 1'.

## Revendications

1. Monture de lunettes pour verres filtrants dont les propriétés filtrantes sont réparties de façon asymétrique sur leur surface et dont la position angulaire de chacun est réglable pour obscurcir une zone désirée du champ visuel, comprenant deux sièges de monture (1, 1') servant à recevoir chacun un verre filtrant (2,2'), chaque siège de monture (1, 1') comportant deux éléments annulaires concentriques (8, 9) dont l'élément annulaire externe (8) est relié au reste (4) de la monture et dont l'élément annulaire interne (9) est destiné à recevoir l'un des verres filtrants et est monté tournant dans l'élément annulaire externe correspondant, des moyens de manoeuvre (17-22) étant associés à chaque élément annulaire interne (9) pour permettre son entraînement en rotation afin d'orienter angulairement le verre filtrant (2, 2') dans le siège de monture correspondant (1, 1'), caractérisé en ce que les deux éléments annulaires concentriques (8, 9) de chaque siège de monture (1, 1') sont constitués par deux éléments gigognes profilés en forme de U couché dont l'ouverture du U est dirigée vers le centre de ces éléments gigognes annulaires, l'espace annulaire de chaque élément gigogne annulaire interne (9) servant à recevoir l'un des verres filtrants (2) et portant lesdits moyens de manoeuvre (17-22) qui présentent un organe de préhension (22) solidaire d'une extrémité d'une tige (21) montée coulissante perpendiculairement au plan des éléments annulaires (8, 9), une échancrure (24) partiellement annulaire étant ménagée dans une des branches parallèles du profilé en U de chaque élément gigogne annulaire externe (8) pour permettre le passage de ladite tige de l'organe de préhension (22) et l'entraînement en rotation de l'élément annulaire interne, et des moyens élastiques (19) étant prévus pour presser l'autre extrémité de cette tige (21) contre la face interne de l'autre des branches parallèles du profilé en U de chaque élément annulaire externe (8) qui présente des ouvertures de positionnement (23) pour recevoir ladite autre extrémité de cette tige afin de bloquer en rotation ledit élément annulaire interne.

2. Monture de lunettes selon la revendication 1, caractérisée en ce que chaque élément gigogne annulaire externe (8) est fendu pour permettre d'écarter ses deux extrémités pour recevoir l'élément gigogne annulaire interne (9) correspondant, chacune des deux extrémités de chaque élément gigogne annulaire externe fendu étant solidaire d'un élément de liaison (11, 12) relié à un organe support commun aux deux éléments annulaires externes (8), lui-même relié au reste (4) de la monture.

3. Monture de lunettes selon la revendication 2, caractérisée par le fait que ledit organe de support commun (3) est relié au reste (4) de la monture par des moyens d'articulation (5, 5') permettant d'écarter les deux sièges de monture des deux verres filtrants respectifs de leur position d'utilisation.

4. Monture de lunettes selon la revendication 3, caractérisée en ce que les deux sièges de monture (1, 1') des deux verres filtrants respectifs (2, 2') présentent des moyens de liaison (14, 15) entre eux pour les rendre solidaires l'un de l'autre autour de l'axe desdits moyens d'articulation (5, 5').

5. Monture de lunettes selon la revendication 1, caractérisée en ce que chacun desdits moyens de manoeuvre (17-22) est destiné à être logé dans un dégagement périphérique (2a) ménagé dans le verre filtrant correspondant.

6. Monture de lunettes selon la revendication 2, caractérisée en ce que ledit organe support commun (3) est constitué par une tige et en ce que chaque élément de liaison (11, 12) est constitué par un tube dont la paroi est traversée par au moins une vis de fixation (13), ce tube étant prévu pour s'engager sur ladite tige de support commune (3), les vis de fixation (13) servant à immobiliser ces tubes le long de ladite tige (3) et à permettre de régler à volonté l'écartement entre lesdits sièges de monture.

## Patentansprüche

1. Brillengestell für absorbierende Gläser, deren absorbierende Eigenschaften unsymmetrisch über ihre Fläche verteilt sind und deren Winkellage einzeln verstellt werden kann, um einen gewünschten Bereich des Gesichtsfeldes abzudunkeln, mit zwei zur Aufnahme je eines absorbierenden Glases (2, 2') diendenden Gestellfassungen (1, 1'), die je zwei konzentrische, ringförmige Elemente (8, 9) umfassen, wovon das äussere ringförmige Element (8) mit dem Rest des Gestells (4) verbunden ist, während das innere ringförmige Element (9) dazu bestimmt ist, eines der absorbierenden Gläser aufzunehmen, und drehbar im entsprechenden äusseren ringförmigen Element eingebaut ist, wobei jedem inneren ringförmigen Element (9) Bedienungsorgane (17 - 22) zugeordnet sind, damit dieses Element in Drehbewegung versetzt werden kann, sodass das absorbierende Glas (2, 2') in der entsprechenden Gestellfassung (1, 1') in seiner Winkelstellung ausgerichtet werden kann, dadurch gekennzeichnet, dass die beiden konzentrischen, ringförmigen Elemente (8, 9) jeder Gestellfassung (1, 1') aus zwei verschachtelten Profilelementen in der Gestalt eines liegenden U bestehen, deren offene U-Seiten dem Mittelpunkt dieser ringförmigen, verschachtelten Elemente zugewandt ist, wobei der ringförmige Raum jedes inneren ringförmigen, verschachtelten Elements (9) dazu dient, eines der absorbierenden Gläser (2) aufzunehmen, und die benannten Bedienungsorgane (17 - 22) trägt, die ein Greiforgan (22) aufweisen, das mit dem einen Ende eines senkrecht zur Ebene der ringförmigen Elemente (8, 9) gleitend montierten Stiftes (21) fest verbunden ist; eine partiell ringförmige Aussparung (24) in einen der parallelen Arme des U-förmigen Profiles jedes äusseren ringförmigen, verschachtelten Elements (8) eingearbeitet ist, um den benannten Stift des Greiforgans (22) durchzulassen und zu gestatten, dass das innere ringförmige Element in Drehung versetzt wird; und elastische Organe (19) vorgesehen sind, um das andere Ende dieses Stifts (21) gegen die Innenseite des anderen parallelen Armes des U-förmigen Profils jedes äusseren ringförmigen Elements (8) zu drücken, die Positionieröffnungen (23) aufweist, um das benannte andere Ende dieses Stiftes aufzunehmen und das benannte innere ringförmige Element in seiner Drehbewegung zu arretieren.

2. Brillengestell gemäss Anspruch 1, dadurch gekennzeichnet, dass jedes äussere ringförmige, verschachtelte Element (8) geschlitzt ist, damit seine beiden Enden auseinandergespreizt werden können, um das entsprechende innere ringförmige, verschachtelte Element (9) aufzunehmen, wobei jedes der beiden Enden jedes geschlitzten, äusseren ringförmigen verschachtelten Elements fest mit einem Verbindungselement (11, 12) verbunden ist, das an ein den beiden äusseren ringförmigen Elementen (8) gemeinsames Stützorgan angeschlossen ist, das seinerseits mit dem Rest des Gestells (4) verbunden ist.

3. Brillengestell gemäss Anspruch 2, dadurch gekennzeichnet, dass das benannte gemeinsame Stützorgan (3) mit dem Rest des Gestells (4) über Gelenkorgane (5, 5') verbunden ist, die es gestatten, die beiden Gestellfassungen der beiden jeweiligen absorbierenden Gläser aus ihrer Gebrauchsstellung herauszuklappen.

4. Brillengestell gemäss Anspruch 3, dadurch gekennzeichnet, dass die beiden Gestellfassungen (1, 1') der beiden jeweiligen absorbierenden Gläser (2, 2') Organe (14, 15) der gegenseitigen Verbindung aufweisen, so dass sie bezüglich der Achse der benannten Gelenkorgane (5, 5') fest miteinander verbunden werden.

5. Brillengestell gemäss Anspruch 1, dadurch gekennzeichnet, dass jedes der benannten Bedienungsorgane (17 - 22) dazu bestimmt ist, in einer peripheren Öffnung (2a) zu lagern, die aus dem entsprechenden absorbierenden Glas herausgearbeitet worden ist.

6. Brillengestell gemäss Anspruch 2, dadurch gekennzeichnet, dass das benannte gemeinsame Stützorgan (3) aus einem Stift besteht und dass jedes Verbindungselement (11, 12) aus einem Rohr besteht, durch dessen Wandung zumindest eine Befestigungsschraube (13) führt und das dafür vorgesehen ist, auf den benannten Stützstift (3) gestülpt zu werden, wobei die Befestigungsschraube (13) dazu dient, diese Rohre auf dem benannten Stift (3) in der Längsrichtung zu arretieren, so dass der Abstand zwischen den beiden Gestellfassungen willkürlich eingestellt werden kann.

## Claims

1. A spectacle frame for filter glasses, the filtering properties of which are distributed asymmetrically over their surface and the angular position of each of which is adjustable in order to darken a desired area of the visual field, comprising two surrounds (1, 1') each serving to hold a filter glass (2, 2'), each surround (1, 1') comprising two concentric annular members (8, 9), the outer annular member (8) of which is connected to the remainder (4) of the frame, and the inner annular member (9) of which is intended to receive one of the filter glasses and is mounted so as to rotate inside the corresponding outer annular member, control means (17 - 22) being associated with each inner annular member (9) for rotation of the latter for angular adjustment of the filter glass (2, 2') in the corresponding surround (1, 1'), characterised in that the two concentric annular members (8, 9) of each surround (1, 1') are formed by two nesting members in the form of a recumbent U, the opening of which faces the centre of these annular nesting members, the annular space of each inner annular nesting member (9) being intended to receive one of the filter glasses (2) and carrying the said control means (17 - 22), which comprise a gripping member (22) integral with one end of a pin (21) mounted so as to slide perpendicularly to the plane of the annular members (8, 9), a partially annular groove (24) being provided in one of the parallel arms of the U of each outer annular nesting member (8) to allow the passage of the said pin of the gripping member (22) and rotation of the inner annular member, and resilient means (19) being provided for pressing the other end of this pin (21) against the inner surface of the other of the parallel arms of the U of each outer annular member (8), the latter having positioning openings (23) for receiving the said other end of this pin in order to block rotation of the said inner annular member.

2. A spectacle frame according to claim 1, characterised in that each outer annular nesting member (8) is split to enable its two ends to be moved apart to receive the corresponding inner annular nesting member (9), each of the two ends of each split outer annular nesting member being integral with a connecting member (11, 12) connected to a supporting member common to the two outer annular members (8), the supporting member itself being connected to the remainder (4) of the frame.

3. A spectacle frame according to claim 2, characterised in that the said common supporting member (3) is connected to the remainder (4) of the frame by articulation means (5, 5') enabling the two surrounds of the two respective filter glasses to be moved out of their position of use.

4. A spectacle frame according to claim 3, characterised in that the two surrounds (1, 1') of the two respective filter glasses (2, 2') have connecting means (14, 15) arranged in between to render them integral with one another about the axis of the said articulation means (5, 5').

5. A spectacle frame according to claim 1, characterised in that each of the said control means (17 - 22) is intended to be mounted in a peripheral gap (2a) provided in the corresponding filter glass.

6. A spectacle frame according to claim 2, characterised in that the said common supporting member (3) is formed by a rod and in that each connecting member (11, 12) is formed by a tube, at least one fixing screw (13) extending through the wall thereof, the tube being provided for engagement on the said common supporting rod (3), the fixing screws (13) serving to immobilise these tubes along the said rod (3) and to allow the distance between the said surrounds to be adjusted at will.
